# EUROPEAN PATENT APPLICATION

(11) **EP 2 832 438 A1**
(43) Date of publication of application: **04.02.2015**
(21) Application number: 12846807.1
(22) Date of filing: 03.08.2012
(51) Int. Cl.: B01J 8/06, B01J 19/24, B01J 10/00, C02F 1/78

(54) **CONTINUOUS OZONATION REACTION DEVICE AND OPERATING METHOD THEREFOR**

(30) Priority: 30.03.2012 CN 201210094323
(71) Applicant: Asymchem Laboratories (Tianjin) Co., Ltd, Tianjin 300457 (CN); Asymchem Life Science (Tianjin) Co., Ltd, Tianjin 300457 (CH); Tianjin Asymchem Pharmaceutical Co., Ltd, Tianjin 300000 (CN); Asymchem Laboratories (Fuxin) Co., Ltd, Fuxin, Liaoning 123000 (CN); Jilin Asymchem Laboratories Co., Ltd, Dunhua, Jilin 133700 (CN)
(72) Inventor: HONG, Hao, Tianjin 300457 (CN); TAO, Jian, Tianjin 300457 (CN); CHEN, Furong, Tianjin 300457 (CN)
(74) Representative: Modiano, Micaela Nadia
(86) International application number: PCT/CN2012/079678
(87) International publication number: WO 2013/143248

(57) **Abstract**

The invention discloses an ozonization continuous reaction device, comprising a raw material inlet, a raw material distributing device, one or plurality of single reaction tubes, a product outlet and an air vent. The first end of the raw material distributing device is communicated with the raw material inlet; the first end of one or plurality of single reaction tubes is communicated with the second end of the raw material distributing device; the product outlet is communicated with the second end of the single reaction tube; ozone is conveyed to the single reaction tube via the air vent. The ozonization continuous reaction device provided by the invention realizes the large-scale and continuous production of the ozonization reaction on the basis of guaranteeing security; as the single reaction tube is arranged, the ozone amount and the liquid raw material existing in the single reaction tube in unit time become fewer, the reaction security is greatly improved; in addition, the liquid raw material and the ozone are continuously fed into the reaction device, the exhaust gas and the products are continuously discharged from the reaction device, the accumulation of the ozone is prevented, the security is greatly guaranteed, and the production capacity also can be improved to a higher level.

## Description

### Technical field of the invention

The invention relates to an ozonization reaction device and a working method thereof, and in particular to an ozonization continuous reaction device and a working method thereof.

### Background of the invention

As an excellent oxidant, the ozone has the advantages of high oxidation capacity, excellent selectivity, fast reaction speed and the like, and further more it is a "clean" oxidant, the ozone can be self-decomposed without residuals after being completely reacted, it has quite simple after-treatment and no environment pollution, and can be widely applied in sewage treatment, disinfection and sterilization, chemical oxidation and the like. In the chemical oxidation field, the most commonly-used ozonization reaction device is a bubbling reaction kettle. However, a large amount of ozone can be easily exploded when being gathered, and most of the reaction solvents are flammable and explosive, while the bubbling reaction kettle is relatively hard to control the ozone concentration in the system, thus causing high risks. The most effective method for reducing the risk is to reduce the amount of the reactant in a unit reactor.

### Summary of the invention

The purpose of the invention is to design an ozonization continuous reaction device and a working method thereof, which can solve the poor security and discontinuous operation problems caused by using the bubbling reaction kettle to implement ozonization reaction at present; by adopting this reaction device, the ozone amount and liquid raw material existing in a single reaction tube in unit time become fewer, the reaction security is greatly improved; and as it is a continuous reaction device, the tail gas and the products are discharged continuously from the reaction device, thus preventing the ozone accumulation; the security is highly guaranteed, and higher production capacity can be achieved.

In order to achieve this purpose, the invention provides an ozonization continuous reaction device, comprising a raw material inlet; a raw material distributing device, of which the first end is communicated with the raw material inlet; one or plurality of single reaction tubes, of which the first end is communicated with the second end of the raw material distributing device; a product outlet, which is communicated with the second end of the single reaction tube; and an air vent, which conveys ozone to the single reaction tube.

Further, stuffing is filled in the single reaction tube, the bottom of the single reaction tube is fixedly provided with a supporting sieve plate; the supporting sieve plate supports the stuffing; and the supporting sieve plate is provided with sieve meshes.

Further, the stuffing is selected from the glass stuffing or the stainless steel stuffing.

Further, the height-diameter ratio of the single reaction tube is more than 20.

Further, the air vent comprises an air port I and an air port II which are arranged on the ozonization continuous reaction device, the first end of each of the single reaction tubes is respectively communicated with the air port I, and the second end of each of the single reaction tubes is respectively communicated with the air port II, the air port I is an exhaust port, and the air port II is an ozone inlet; or, the air port I is an ozone inlet, and the air port II is an exhaust port.

Further, the single reaction tubes are arranged in a cooling reaction chamber inside the ozonization continuous reaction device, a refrigerant port I which is arranged close to the raw material inlet and a refrigerant port II which is arranged close to the product outlet are arranged on a side wall surrounding the periphery of the cooling reaction chamber; the refrigerant port I is a refrigerant outlet, and the refrigerant port II is a refrigerant inlet.

Further, the raw material distributing device adopts the overflow principle to realize the uniform liquid distribution.

Further, the ozonization continuous reaction device is a sealed container.

Further, the raw material distributing device comprises: a raw material feeding chamber formed in the ozonization continuous reaction device, wherein the raw material inlet is communicated with the raw material feeding chamber; plurality of raw material distributing tubes, which are arranged correspondingly to the single reaction tubes one to one, wherein the first end of each of the raw material distributing tubes extends to the raw material feeding chamber, and the second end thereof extends to the first end of each of the single reaction tubes.

Further, the ozonization continuous reaction device further comprises: a ventilation chamber formed inside the ozonization continuous reaction device, which is externally communicated via the air port I, and is connected with the first end of the single reaction tube, in addition, the plurality of raw material distributing tubes pass through the ventilation chamber to extend into the single reaction tube; a product collecting chamber formed inside the ozonization continuous reaction device, which is externally communicated via the air port II, and is communicated with the second end of the single reaction tube; the air port I is the exhaust port, and the air port II is the ozone inlet; or, the air port I is the ozone inlet, and the air port II is the exhaust port.

Further, the first end of each of the single reaction tubes penetrates through a bottom wall of the ventilation chamber which is far away from the raw material feeding chamber, and is communicated with the ventilation chamber; each of the raw material distributing tubes extends along an axis of the single reaction tube, and an outer wall of a tube section of the raw material distributing tube extending into the single reaction tube and an inner wall of the single reaction tube form an annular groove which is in gas-phase communication with the ventilation chamber.

Further, a cooling reaction chamber for placing each of the single reaction tubes is arranged between the ventilation chamber and the product collecting chamber, the cooling reaction chamber and the product collecting chamber are separated by the supporting sieve plate, each of the single reaction tubes is arranged on the supporting sieve plate, and the sieve meshes for communicating the single reaction tubes and the product collecting chamber are arranged on the supporting sieve plate.

Further, the stuffing is filled in each of the single reaction tubes.

Further, a structure which is matched with the inner wall of the ozonization continuous reaction device is arranged on the periphery of the supporting sieve plate, and a hexagonal sieve mesh distribution area is arranged inside the supporting sieve plate, the sieve meshes are distributed in the hexagonal sieve mesh distribution area.

Meanwhile, the invention also provides a working method of the ozonization continuous reaction device, comprising the steps that: S1, the liquid raw material and ozone are respectively and continuously fed into the reaction device via the raw material inlet and the air vent; S2, the liquid raw material is uniformly distributed to the single reaction tubes via the raw material distributing device; S3, after the liquid raw material and the ozone are reacted in the single reaction tubes, the exhaust gas is continuously exhausted from the exhaust port, and the products are continuously discharged from the product outlet.

Further, in the Step S1, the ozone is fed into the reaction device via the air port II which is communicated with the second end of the single reaction tube, and in the Step S3, after the liquid raw material and the ozone are in countercurrent contact reaction inside the single reaction tube, the exhaust gas is continuously exhausted from the air port I which is communicated with the first end of the single reaction tube, and the products are continuously discharged from the product outlet; or, in the Step S1, the ozone is fed into the reaction device via the air port I; and in the Step S3, after the liquid raw material and the ozone are in cocurrent contact reaction inside the single reaction tube, the exhaust gas is continuously exhausted from the air port II, and the products are continuously discharged from the product outlet.

Further, in the Step S2, the stuffing is filled in the single reaction tubes, and the supporting sieve plate is fixed at the bottom of the single reaction tube for supporting the stuffing.

Further, a shell side of the reaction device controls the reaction temperature by feeding and discharging the refrigerant via the refrigerant port I and the refrigerant port II.

Further, the raw material distributing device of the reaction device adopts the overflow principle to realize the uniform liquid distribution.

The advantages of the invention are as follows: the amount of the single reaction tubes depends on the production capacity; the large-scale and continuous production of ozonization reaction can be realized on the basis of guaranteeing the security; the inner diameter of the single reaction tube of the reaction device is in millimeter level, the volume of the single reaction tube is tens to hundreds of milliliters, and the ozone amount and liquid material existing in the single reaction tube in unit time become fewer, thus the reaction security is greatly improved; in addition, the liquid raw materials and the ozone are continuously fed into the reaction device, the exhaust gas and the products are continuously discharged from the reaction device, thus preventing the ozone accumulation; the security is highly guaranteed, and higher production capacity can be achieved.

Except the purposes, characteristics and advantages described above, the invention also has other purposes, characteristics and advantages. The invention is further described in details below with reference to the drawings.

### Brief description of the drawings

The drawings form a part of the specification, and are used for further explaining the invention. The drawings show the preferred embodiments of the invention, and are used for describing the principles of the invention together with the specification. In the drawings:
Fig. 1 shows a structural diagram of an ozonization continuous reaction device according to the invention. And
Fig. 2 shows a structural diagram of a supporting sieve plate of the ozonization continuous reaction device according to the invention.

Wherein, 10 represents an ozonization continuous reaction device, 11 represents a raw material feeding chamber, 111 represents a raw material inlet, 13 represents a ventilation chamber, 50 represents a raw material distributing tube, 131 represents an air port I, 133 represents a bottom wall of the ventilation chamber 13 which is far away from the raw material feeding chamber 11, 15 represents a cooling reaction chamber, 30 represents a single reaction tube, 31 represents stuffing, 151 represents a refrigerant port II, 153 represents a refrigerant port I, 17 represents a product collecting chamber, 171 represents a product outlet, 173 represents an air port II, 70 represents a supporting sieve plate, 71 represents a sieve mesh.

### Detailed description of the invention

The technical solutions in the embodiment of the invention are described in details below with reference to the drawings of the embodiments of the invention, however, the following embodiments and the drawings are only used for explaining the invention, without limiting the invention; the invention can be implemented by various different modes which are limited and covered by the claims.

An exemplary embodiment of the invention provides an ozonization continuous reaction device, comprising a raw material inlet 111, a raw material distributing device, one or plurality of single reaction tubes 30 and an air vent. The first end of the raw material distributing device is communicated with the raw material inlet; the first end of one or plurality of single reaction tubes 30 is communicated with the second end of the raw material distributing device; the product outlet 171 is communicated with the second end of the single reaction tube 30; and the air vent conveys the ozone to the single reaction tubes 30.

By setting plurality of single reaction tubes which are respectively connected with the raw material distributing devices and the air vent which conveys the ozone, so as to reduce the amount of the ozone and liquid raw material existing in the single reaction tube in unit time, the ozonization continuous reaction device and the method for implementing continuous ozonization production thereby provided by the invention can avoid the potential safety hazards caused by the ozone gathering, and can greatly improve the reaction security, while realizing the large-scale and continuous production of the ozonization continuous reaction on the basis of guaranteeing security.

In actual operations, the inner diameter of the single reaction tube can be set as millimetre level according to the ozone concentration control requirements, and the volume of the single reaction tube can be set as tens to hundreds of millilitres according to the reaction time, thus the ozone amount and the liquid raw material existing in each single reaction tube in unit time become fewer, the reaction security is highly improved. In the ozonization continuous reaction device provided by the invention, the liquid raw material is continuously fed into each single reaction tube 30 via a raw material distributing unit, the ozone raw material is continuously fed into each single reaction tube 30 via an ozone distributing unit, and after the continuous reaction in the single reaction tube 30, the exhaust gas and the products are continuously discharged from the reaction device, thus avoiding ozone accumulation; the security is highly guaranteed, and the higher production capacity can be achieved.

In order to make the liquid raw material and the ozone in the single reaction tubes 30 better contact and react, preferably, the stuffing 31 is filled in the single reaction tube 30 of the above ozonization continuous reaction device, the bottom of the single reaction tube 30 is fixedly provided with the supporting sieve plate 70; the supporting sieve plate 70 supports the stuffing 31; the sieve meshes 71 are arranged on the supporting sieve plate 70; in such a structure, the setting of stuffing is helpful for extending the reaction line of the reaction solution in the single reaction tube 30, and making the liquid raw material and the ozone be in better contact reaction, so as to obtain a better product conversion rate.

The stuffing 31 adopted in the invention comprises, but is not limited by the glass stuffing or the stainless steel stuffing. Both of the glass stuffing and the stainless steel stuffing cannot react with the liquid raw material or the ozone, thereby preventing from producing by-products.

Preferably, the height-diameter ratio of the single reaction tube 30 adopted in the above ozonization continuous reaction device is more than 20. It is beneficial for selecting the single reaction tubes 30 with proper diameters, while making the raw material be completely reacted in the single reaction tubes 30 to improve the yield, by making the height-diameter ratio of the single reaction tube 30 be more than 20.

Preferably, in the above ozonization continuous reaction device, the air vent comprises an air port I 131 and an air port II 173 which are arranged on the ozonization continuous reaction device, the first end of each of the single reaction tubes is respectively communicated with the air port I 131, and the second end of each of the single reaction tubes is respectively communicated with the air port II 173, the air port I 131 is an exhaust port, and the air port II 173 is an ozone inlet; or, the air port I 131 is an ozone inlet, and the air port II 173 is an exhaust port.

In actual operations, the positions of the ozone inlet and the exhaust port can be set according to actual situations, when the air port I 131 is the exhaust port, and the air port II 173 is the ozone inlet, the liquid raw material and the ozone are in cocurrent contact reaction in the single reaction tube. When the air port I 131 is the ozone inlet, and the air port II 173 is the exhaust port, the liquid raw material and the ozone are in countercurrent contact reaction in the single reaction tube. Both of the reaction modes can implement the effects required by the invention.

Preferably, in the above ozonization continuous reaction device, the single reaction tubes 30 are arranged in the cooling reaction chamber 15 inside the ozonization continuous reaction device, a refrigerant port I 153 close to the raw material inlet 111 and a refrigerant port II 151 close to the product outlet 171 are arranged on the side wall surrounding the periphery of the cooling reaction chamber 15. In such a structure, by feeding the refrigerant into the side wall which surrounds the periphery of the cooling reaction chamber 15, the temperature in the cooling reaction chamber 15 can be effectively reduced, while the temperature therein can be equalized, thereby, the proper reaction temperature can be provided for the reaction implemented in the single reaction tube; and the reaction quality cannot be influenced as this cooling mode cannot contact with the reaction raw material. In actual operations, the refrigerant port I 153 is preferably selected as the refrigerant outlet, and the refrigerant port II 151 is the refrigerant inlet; and the process that the refrigerant liquid is passively driven to flow upwards is more beneficial for implementing heat exchange between the refrigerant liquid with the inner part of the cooling reaction chamber 15.

Preferably, the above raw material distributing device adopts the overflow principle to realize the uniform liquid distribution.

Preferably, the above ozonization continuous reaction device is a sealed container.

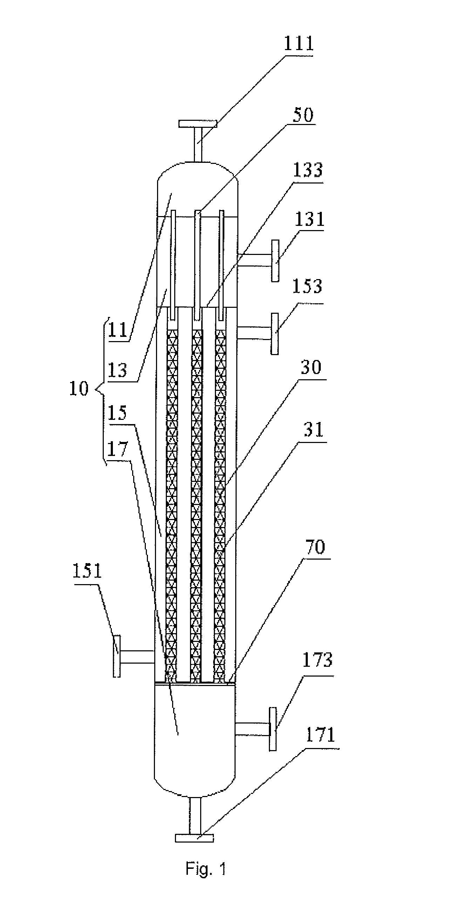

In order to simplify the demands of devices required by the ozonization continuous reaction device, to make the devices be easily manufactured, and to make the space utilization rate be higher, as shown in Fig. 1, in a preferred embodiment of the invention, the raw material distributing device in the ozonization continuous reaction device comprises: a raw material feeding chamber 11 and plurality of raw material distributing tubes 50 formed in the ozonization continuous reaction device. The raw material feeding chamber 11 formed in the ozonization continuous reaction device, wherein the raw material inlet 111 is communicated with the raw material feeding chamber 11; the plurality of raw material distributing tubes 50 are arranged correspondingly to the single reaction tubes 30 one to one, wherein the first end of each of the raw material distributing tubes 50 extends to the raw material feeding chamber 11, and the second end thereof extends to the first end of each of the single reaction tubes 30.

In the above structure, the sealed space inside the ozonization continuous reaction device is sectionalized to form the chambers with special functions, thereby reducing the device investment. And by setting the raw material distributing tubes 50, the liquid raw material can be directly fed into the raw material distributing tubes 50 to flow to the single reaction tubes 30, and then the ozone is fed into each of the single reaction tubes 30 to realize the large-scale and continuous production of the ozonization reaction.

Preferably, in the ozonization continuous reaction device 10, the inner part of the ozonization continuous reaction device further comprises: a ventilation chamber 13 formed inside the ozonization continuous reaction device and a product collecting chamber 17 formed inside the ozonization continuous reaction device. The ventilation chamber 13 is externally communicated via the air port I 131, and is connected with the first end of the single reaction tube 30, in addition, the plurality of raw material distributing tubes 50 pass through the ventilation chamber 13 to extend into the single reaction tube 30; the product collecting chamber 17 is externally communicated via the air port II 131, and is communicated with the second end of the single reaction tube 30; the air port I 131 is the exhaust port, and the air port II 173 is the ozone inlet; or, the air port I 131 is the ozone inlet, and the air port II 173 is the exhaust port.

Similarly, in the above structure, the sealed space inside the ozonization continuous reaction device is sectionalized to form the chambers with special functions, thereby reducing the device investment. The connection relationship among the single reaction tube 30, the raw material feeding chamber 11 and the ozone feeding chamber 13 is simplified via a nesting mode, thus the liquid raw material can directly flow to the single reaction tube 30 via the raw material distributing tube 50, and the ventilation chamber 13 is in gas-phase communication with the single reaction tube via a gap between the part of the raw material distributing tube 50 inside the single reaction tube 30 and the single reaction tube 30 . Such structure provides a simple mounting condition for the air port I 131 and the air port II 173, and respectively conveys the liquid raw material and the ozone via a simple structure.

More preferably, in the ozonization continuous reaction device, the first end of each of the single reaction tubes 30 penetrates through the bottom wall 133 of the ventilation chamber 13 which is far away from the raw material feeding chamber 11 to communicate with the ventilation chamber 13; each of the raw material distributing tubes 50 extends along the axis of the single reaction tube 30, and an outer wall of a tube section of the raw material distributing tube 50 extending into the single reaction tube 30 and the inner wall of the single reaction tube 30 form an annular groove which is communicated with the ventilation chamber 13. By adopting this structure, the invention not only has simple structure and easy preparation, but also is beneficial for controlling the uniformity of the ozone flowing into the single reaction tube, preventing the ozone from gathering, and improving the reaction security.

In actual operations, the part of the raw material distributing tube 50 extending inside the raw material feeding chamber 11 is made to be a preset distance higher than the bottom wall of the raw material feeding chamber close to the single reaction tube 30, so as to make the liquid raw material flow into the raw material feeding chamber from a raw material inlet 111, and flow to the bottom wall of the raw material feeding chamber; when the liquid raw material on the bottom wall of the raw material feeding chamber is higher than the feeding hole of the raw material distributing tube 50, the liquid raw material uniformly flows into each of the raw material distributing tubes 50, so as to make the liquid raw material be uniformly distributed in each of the raw material distributing tubes. Preferably, the raw material inlet can be arranged on the top of the raw material feeding chamber along the axis of the ozonization continuous reaction device.

Meanwhile, in the above structure, the air port I 131 which is connected with the ventilation chamber can be arranged randomly; when the air port I 131 is the ozone inlet, the ozone can flow towards the direction of the raw material feeding chamber after entering into the ozone feeding chamber, and after the ozone molecules are fully distributed in the ozone feeding chamber, the ozone can uniformly flow into the single reaction tubes 30 from the annular groove which is formed between the outer wall of each of the raw material distributing tubes 50 and the inner wall of each of the single reaction tubes 30.

In a preferred embodiment of the invention, in the above ozonization continuous reaction device, a cooling reaction chamber 15 for arranging each of the single reaction tubes 30 is arranged between the ventilation chamber 13 and the product collecting chamber 17; the cooling reaction chamber 15 and the product collecting chamber 17 are separated via the supporting sieve plate 70, each of the single reaction tubes 30 is arranged on the supporting sieve plate 70, and the sieve meshes 71 for communicating the single reaction tubes 30 and the product collecting chamber 17 are arranged on the supporting sieve plate 70. In such structure, the sieve meshes 71 arranged on the supporting sieve plate can make the gas which flows from the air port II uniformly flow into the single reaction tube 30, so as to realize gas uniform distribution.

Preferably, in the above ozonization continuous reaction device, the stuffing 31 is arranged in each of the single reaction tubes 30, the stuffing 31 is filled in a reaction chamber which is encircled by the single reaction tubes 30 and the supporting sieve plate 70. In such structure, the setting of the stuffing is helpful for extending the reaction line of the reaction solution in the single reaction tube 30, and making the liquid raw material and the ozone be in better contact reaction, so as to obtain a better product conversion rate.

Preferably, in the above ozonization continuous reaction device, the structure which is matched with the inner wall of the ozonization continuous reaction device is arranged on the periphery of each of the supporting sieve plates 70, and a hexagonal sieve mesh distributing area is arranged inside each of the supporting sieve plates 70; the sieve meshes 71 are distributed in the hexagonal sieve mesh distributing area to form plurality of groups which are parallel with one side of the sieve mesh distributing area; each sieve mesh 71 is equidistantly arranged in each group, and each of the sieve meshes 71 in two adjacent groups are in staggered arrangement. The supporting sieve plate 70 with such structure can be easily manufactured, and can match the single reaction tubes 30 which are distributed inside the cooling reaction chamber 15 in any mode; this supporting sieve plate 70 has universality, and can be conveniently changed.

An exemplary embodiment of the invention also provides a working method which applies the above ozonization continuous reaction device, comprising the steps below: S1, the liquid raw material and the ozone are respectively and continuously fed into the reaction device from the raw material inlet and the air vent; S2, the liquid raw material is uniformly distributed into the single reaction tube from the raw material distributing device; S3, after the liquid raw material and the ozone are reacted in the single reaction tube, the exhaust gas is continuously exhausted from the exhaust port, and the products are continuously discharged from the product outlet. By adopting the method provided by the invention, the amount of the ozone and the liquid raw material existing in the single reaction tube in unit time is reduced by setting plurality of single reaction tubes 30, thus avoiding the potential safety hazard caused by hardly-controlled ozone concentration, greatly improving the reaction security, and realizing the large-scale and continuous production of the ozonization reaction while guaranteeing the security.

Preferably, in the working method of the above ozonization continuous reaction device, the ozone is fed into the reaction device from the air port II 173 which is communicated with the second end of the single reaction tube in the Step S1; and in the Step S3, after the liquid raw material and the ozone are in countercurrent contact reaction in the single reaction tube, the exhaust gas is continuously exhausted from the air port I 131 which is communicated with the first end of the single reaction tube 30, and the products are continuously discharged from the product outlet 171.

Preferably, in the working method of the above ozonization continuous reaction device, the ozone is fed into the reaction device from the air port I 131 in the Step S1; and in the Step S3, after the liquid raw material and the ozone are in co-current contact reaction in the single reaction tube, the exhaust gas is continuously exhausted from the air port II 173, and the products are continuously discharged from the product outlet 171.

Preferably, in the Step S2 of the working method of the above ozonization continuous reaction device, the single reaction tube 30 is filled with the stuffing 31, the supporting sieve plate 70 is fixed at the bottom of the single reaction tube 30 to support the stuffing 31. The stuffing is used for making the liquid raw material and the ozone in the single reaction tube 30 be in full contact reaction.

Preferably, in the working method of the above ozonization continuous reaction device, the shell side controls the reaction temperature by feeding and discharging the refrigerant via the refrigerant port I 153 and the refrigerant port II 151.

Preferably, in the method for implementing the continuous ozonization reaction of the above ozonization continuous reaction device, the raw material distributing device adopts the overflow principle to realize the uniform liquid distribution.

The structure and advantages of the ozonization continuous reaction device provided by the invention are further described below with reference to the specific embodiments 1-3.

### Embodiment 1:

An ozonization continuous reaction device (as shown in Fig. 1) is provided with a raw material distributing device and 43 single reaction tubes 30 therein; the input end of the ozonization continuous reaction device is provided with a raw material inlet 111, and the output end of the ozonization continuous reaction device is provided with a product outlet 171; the raw material distributing device is arranged on the input end inside the device; the input end of the raw material distributing device is corresponding to the raw material inlet 111, and the output end of the raw material distributing device is connected with the input end of the single reaction tube 30; the output end of the single reaction tube 30 is corresponding to the product outlet 171; an air port I 131 is arranged on the device wall of the mounting part of the raw material distributing device; an air port II 173 is arranged on the device wall between the output end of the single reaction tube 30 and the product outlet 171.

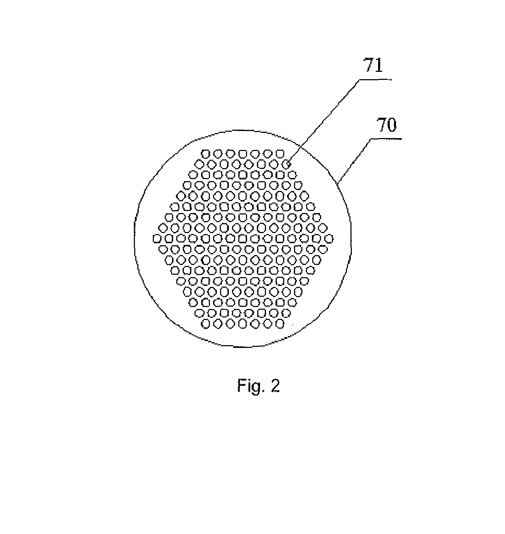

The stuffing 31 is filled in the single reaction tube 30, and the bottom of the single reaction tube 30 is fixedly provided with the supporting sieve plate 70; the supporting sieve plate 70 supports the stuffing 31; and the sieve meshes 71 are arranged on the supporting sieve plate 70. (As shown in Fig. 1 and Fig. 2)

The height-diameter ratio of the single reaction tube 30 is 28.

The stuffing 31 is the glass stuffing.

The raw material distributing device adopts the overflow principle to realize the uniform liquid distribution.

The air port I 131 is the exhaust port, and the air port II 173 is the ozone inlet.

The refrigerant port I 153 and the refrigerant port II 151 are arranged on the device wall of the mounting part of the single reaction tube 30.

The refrigerant port I 153 is a refrigerant outlet, and the refrigerant port II 151 is a refrigerant inlet.

The ozonization continuous reaction device is a sealed container. (As shown in Fig. 1)

A working method of the above ozonization continuous reaction device (as shown in Fig. 1), wherein the method comprises the following steps:
S1, the liquid raw material and the ozone are respectively and continuously fed into the reaction device from the raw material inlet 111;
S2, the liquid raw material is uniformly distributed into the single reaction tube 30 from the raw material distributing device;
S3, after the liquid raw material and the ozone are reacted in the single reaction tube 30, the exhaust gas and the products are respectively and continuously discharged from the exhaust port and the product outlet 171.

In the Step S1, the ozone is fed into the reaction device via the air port II 173; and in the Step S3, after the liquid raw material and the ozone are in countercurrent contact reaction in the single reaction tube 30, the exhaust gas and the products are respectively and continuously discharged from the air port I 131 and the product outlet 171.

In the Step S2, the stuffing 31 is filled in the single reaction tubes 30, the supporting sieve plate 70 is fixed at the bottom of the single reaction tube 30 for supporting the stuffing 31.

The shell side of the reaction device controls the reaction temperature by feeding and discharging the refrigerant via the refrigerant port I 153 and the refrigerant port II 151.

Embodiment 2: an ozonization continuous reaction device (as shown in Fig. 1) is provided with a raw material distributing device and 37 single reaction tubes 30 therein; the input end of the ozonization continuous reaction device 10 is provided with a raw material inlet 111, and the output end of the ozonization continuous reaction device 10 is provided with a product outlet 171; the raw material distributing device is arranged on the input end inside the device; the input end of the raw material distributing device is corresponding to the raw material inlet 111, and the output end of the raw material distributing device is connected with the input end of the single reaction tube 30; the output end of the single reaction tube 30 is corresponding to the product outlet 151; an air port I 131 is arranged on the device wall of the mounting part of the raw material distributing device; an air port II 173 is arranged on the device wall between the output end of the single reaction tube 30 and the product outlet 171.

The stuffing 31 is filled in the single reaction tube 30, and the bottom of the single reaction tube 30 is fixedly provided with the supporting sieve plate 70; the supporting sieve plate 70 supports the stuffing 31; and the sieve meshes 71 are arranged on the supporting sieve plate 70. (As shown in Fig. 1 and Fig. 2)

The height-diameter ratio of the single reaction tube 30 is 30.

The stuffing 31 is the stainless steel stuffing.

The raw material distributing device adopts the overflow principle to realize the uniform liquid distribution.

The air port I 131 is the ozone inlet, and the air port II 173 is the exhaust port,.

The refrigerant port I 153 and the refrigerant port II 151 are arranged on the device wall of the mounting part of the single reaction tube 30. (As shown in Fig. 1)

The refrigerant port I 153 is a refrigerant outlet, and the refrigerant port II 151 is a refrigerant inlet.

The ozonization continuous reaction device is a sealed container. (As shown in Fig. 1)

A working method of the above ozonization continuous reaction device (as shown in Fig. 1), wherein the method comprises the following steps:
S1, the liquid raw material and the ozone are respectively and continuously fed into the reaction device from the raw material inlet 111 and the air vent;
S2, the liquid raw material is uniformly distributed into the single reaction tube 30 via the raw material distributing device;
S3, after the liquid raw material and the ozone are reacted in the single reaction tube 30, the exhaust gas and the products are respectively and continuously discharged from the exhaust port and the product outlet 171.

In the Step S1, the ozone is fed into the reaction device from the air port I 131; and in the Step S3, after the liquid raw material and the ozone are in co-current contact reaction in the single reaction tube 30, the exhaust gas and the products are respectively and continuously discharged from the air port II 173 and the product outlet 171.

In the Step S2, the stuffing 31 is filled in the single reaction tubes 30, the supporting sieve plate 70 is fixed at the bottom of the single reaction tube 30 for supporting the stuffing 31.

The shell side of the reaction device controls the reaction temperature by feeding and discharging the refrigerant via the refrigerant port I 153 and the refrigerant port II 151.

The above is only the preferred embodiment of the invention and not intended to limit the invention; for those skilled in the field, the invention can have various changes and modifications. And any modifications, equivalent replacements, improvements and the like within the spirit and principle of the invention shall fall within the scope of protection of the invention.

## Claims

1. An ozonization continuous reaction device **characterized by** comprising:
a raw material inlet (111);
a raw material distributing device, of which the first end is communicated with the raw material inlet;
one or plurality of single reaction tubes (30), of which the first end is communicated with the second end of the raw material distributing device;
a product outlet (171), which is communicated with the second end of the single reaction tube (30);
an air vent, which conveys ozone to the single reaction tube (30).

2. The reaction device according to claim 1, wherein, stuffing (31) is filled in the single reaction tube (30), the bottom of the single reaction tube (30) is fixedly provided with a supporting sieve plate (70); the supporting sieve plate (70) supports the stuffing (31); and the supporting sieve plate (70) is provided with sieve meshes (71).

3. The reaction device according to claim 2, wherein, the stuffing (31) is selected from the glass stuffing or the stainless steel stuffing.

4. The ozonization continuous reaction device according to claim 1, wherein, the height-diameter ratio of the single reaction tube (30) is more than 20.

5. The ozonization continuous reaction device according to claim 1, wherein, the air vent comprises an air port I (131) and an air port II (173) which are arranged on the ozonization continuous reaction device, the first end of each of the single reaction tubes is respectively communicated with the air port I (131), and the second end of each of the single reaction tubes is respectively communicated with the air port II (173), the air port I (131) is an exhaust port, and the air port II (173) is an ozone inlet; or, the air port I (131) is an ozone inlet, and the air port II (173) is an exhaust port.

6. The ozonization continuous reaction device according to claim 1, wherein the single reaction tubes (30) are arranged in a cooling reaction chamber (15) inside the ozonization continuous reaction device (10), a refrigerant port I (153) which is arranged close to the raw material inlet (111) and a refrigerant port II (151) which is arranged close to the product outlet (171) are arranged on a side wall surrounding the periphery of the cooling reaction chamber (15); the refrigerant port I (153) is a refrigerant outlet, and the refrigerant port II (151) is a refrigerant inlet.

7. The ozonization continuous reaction device according to claim 1, wherein, the raw material distributing device adopts the overflow principle to realize the uniform liquid distribution.

8. The ozonization continuous reaction device according to any one of claims 1 to 7, wherein, the ozonization continuous reaction device is a sealed container.

9. The ozonization continuous reaction device according to claim 1, wherein, the raw material distributing device comprises:
a raw material feeding chamber (11) formed in the ozonization continuous reaction device, wherein the raw material inlet (111) is communicated with the raw material feeding chamber (11);
plurality of raw material distributing tubes (50), which are arranged correspondingly to the single reaction tubes (30) one to one, wherein the first end of each of the raw material distributing tubes (50) extends to the raw material feeding chamber (11), and the second end thereof extends to the first end of each of the single reaction tubes (30).

10. The ozonization continuous reaction device according to claim 9, wherein, the ozonization continuous reaction device further comprises:
a ventilation chamber (13) formed inside the ozonization continuous reaction device, which is externally communicated via the air port I (131), and is connected with the first end of the single reaction tube (30), in addition, the plurality of raw material distributing tubes (50) pass through the ventilation chamber (13) to extend into the single reaction tube (30);
a product collecting chamber (17) formed inside the ozonization continuous reaction device, which is externally communicated via the air port II (173), and is communicated with the second end of the single reaction tube (30);
the air port I (131) is the exhaust port, and the air port II (173) is the ozone inlet; or, the air port I (131) is the ozone inlet, and the air port II (173) is the exhaust port.

11. The ozonization continuous reaction device according to claim 10, wherein,
the first end of each of the single reaction tubes (30) penetrates a bottom wall (133) of the ventilation chamber (13) which is far away from the raw material feeding chamber (11), and is communicated with the ventilation chamber (13);
each of the raw material distributing tubes (50) extends along an axis of the single reaction tube (30), and an outer wall of a tube section of the raw material distributing tube (50) extending into the single reaction tube (30) and an inner wall of the single reaction tube (30) form an annular groove which is in gas-phase communication with the ventilation chamber (13).

12. The ozonization continuous reaction device according to any one of claims 9 to 11, wherein, a cooling reaction chamber (15) for placing each of the single reaction tubes (30) is arranged between the ventilation chamber (13) and the product collecting chamber (17), the cooling reaction chamber (15) and the product collecting chamber (17) are separated by the supporting sieve plate (70), each of the single reaction tubes (30) is arranged on the supporting sieve plate (70), and the sieve meshes (71) for communicating the single reaction tubes (30) and the product collecting chamber (17) are arranged on the supporting sieve plate (70).

13. The ozonization continuous reaction device according to claim 12, wherein, the stuffing (31) is filled in each of the single reaction tubes (30).

14. The ozonization continuous reaction device according to claim 12, wherein, a structure which is matched with the inner wall of the ozonization continuous reaction device is arranged on the periphery of the supporting sieve plate (70), and a hexagonal sieve mesh distribution area is arranged inside the supporting sieve plate (70), the sieve meshes (71) are distributed in the hexagonal sieve mesh distribution area.

15. A working method of the ozonization continuous reaction device according to any one of claims 1 to 14, wherein, the method comprises the steps below:
S1, the liquid raw material and ozone are respectively fed into the reaction device via the raw material inlet and the air vent;
S2, the liquid raw material is uniformly distributed to the single reaction tubes via the raw material distributing device;
S3, after the liquid raw material and the ozone are reacted in the single reaction tubes, the exhaust gas is continuously exhausted from the exhaust port, and the products are continuously discharged from the product outlet.

16. The working method of the ozonization continuous reaction device according to claim 15, wherein,
in the Step S1, the ozone is fed into the reaction device via the air port II (173) which is communicated with the second end of the single reaction tube, and in the Step S3, after the liquid raw material and the ozone are in countercurrent contact reaction inside the single reaction tube, the exhaust gas is continuously exhausted from the air port I (131) which is communicated with the first end of the single reaction tube (30), and the products are continuously discharged from the product outlet (171);
or, in the Step S1, the ozone is fed into the reaction device via the air port I (131); and in the Step S3, after the liquid raw material and the ozone are in cocurrent contact reaction inside the single reaction tube, the exhaust gas is continuously exhausted from the air port II (173), and the products are continuously discharged from the product outlet (171).

17. The working method of the ozonization continuous reaction device according to claim 16, wherein in the Step S2, the stuffing (31) is filled in the single reaction tubes (30), and the supporting sieve plate (70) is fixed at the bottom of the single reaction tube (30) to support the stuffing (31).

18. The working method of the ozonization continuous reaction device according to claim 16, wherein a shell side of the reaction device controls the reaction temperature by feeding and discharging the refrigerant via the refrigerant port I (153) and the refrigerant port II (151).

19. The working method of the ozonization continuous reaction device according to claim 16, wherein the raw material distributing device of the reaction device adopts the overflow principle to realize the uniform liquid distribution.
